## Europäisches Patentamt

## European Patent Office

## Office européen des brevets

(11) Veröffentlichungsnummer: **0 283 981**

**A2**

(12) # EUROPÄISCHE PATENTANMELDUNG

(21) Anmeldenummer: 88104440.8

(22) Anmeldetag: 19.03.88

(51) Int. Cl.⁴: **E21B 4/02** , F16C 17/06

(30) Priorität: 25.03.87 DE 3709838

(43) Veröffentlichungstag der Anmeldung:
28.09.88 Patentblatt 88/39

(84) Benannte Vertragsstaaten:
**BE FR GB NL**

(71) Anmelder: **Eastman Christensen Company**
**365 Bugatti Street**
**Salt Lake City Utah 84126(US)**

(72) Erfinder: **Krüger, Volker, Dr.-Ing.**
**Sassengarten 8**
**D-3100 Celle(DE)**
Erfinder: **Daenicke, Heinrich**
**Sandlinger Kirchweg 10**
**D-3101 Wienhausen(DE)**

(74) Vertreter: **Busse & Busse Patentanwälte**
**Postfach 1226 Grosshandelsring 6**
**D-4500 Osnabrück(DE)**

(54) **Meisseldirektantrieb für Tiefbohrwerkzeuge.**

(57) Der Meißeldirektantrieb für Tiefbohrwerkzeuge umfaßt ein rohrförmiges Gehäuse (1), eine darin angeordnete, von durchströmender Bohrspülung antreibbare Rotationsmaschine (4), eine mit dieser und einem Drehbohrmeißel (6) verbundene, radial gelagerte Welle (5) und zumindest ein der Bohrspülung ausgesetztes Gleitlager (8) zur Axiallagerung der Welle (5). Das Gleitlager (8) umfaßt seinerseits wenigstens einen an der Welle (5) abgestützten Spurring (9) sowie wenigstens einen jeweils mit einem Spurring (9) zusammenwirkenden, am Gehäuse (1) abgestützten Tragring (10), der eine Mehrzahl von über seinen Umfang regelmäßig verteilt angeordneten Lagersegmenten (13) aufweist, die mit einem gegen die Wirkung einer Federkraft begrenzt kipp-und axialverlagerbar gegenüber dem Tragring abgestützten Gleitkörper (14) versehen sind. Der Gleitkörper (14) ist dabei als kreisförmige Platte ausgebildet, die an ihrer Unterseite einen mit Spiel in eine axiale Bohrung (16) im Tragring (10) eingreifenden Haltezapfen (15) trägt und gegenüber dem Tragring (10) durch ein Federpaket (17;18) mit zumindest zwei gegensinnig gestapelten Tellerfedern (19,20) abgestützt ist.

## Meißeldirektantrieb für Tiefbohrwerkzeuge

Die Erfindung bezieht sich auf einen Meißeldirektantrieb für Tiefbohrwerkzeuge nach dem Oberbegriff des Patentanspruch 1.

Bei einem bekannten Meißeldirektantrieb dieser Art (DE-PS 35 13 124) sind die Lagersegmente jeweils am freien Ende eines Biegebalkens angeordnet, der ausgeformter Bestandteil des Tragringes ist. Eine derartige Axiallagerkonstruktion ist besonders verschleißarm, da die Bildung eines in Drehrichtung des Lagerringes relativ zu den Lagersegmenten konvergierenden Spaltes ermölicht wird, in welchem die Bohrspülung einen Schmierfilm aufbaut. Die Biegebalken sind auch geeignet, sehr hohe Belastungen aufzunehmen, haben jedoch nur einen geringen Betriebsfederweg und vermitteln dem Axiallager daher nur einen geringen Toleranzausgleich je Spurring/Tragring-Paarung. In Fällen, in denen ein verhältnismäßig größer Toleranzausgleich durch das Axiallager erforderlich ist, muß das Axiallager eine Vielzahl von Spurring/Tragring-Paarungen umfassen, was mit hohen Kosten und auch einer erhelbichen Baugröße des Axiallagers einhergeht.

Der Erfindung liegt die Aufgabe zugrunde, einen Meißeldirektantrieb mit einem insbesondere für geringere axi ale Belastungen geeigneten Axiallager zu schaffen, das preisgünstig ist und einen höheren Toleranzausgleich je Spurring/Tragring-Paarung erbringt.

Diese Aufgabe wird bei einem Meißeldirektantrieb der gattungsgemäßen Art durch die kennzeichnenden Merkmale des Patenanspruchs 1 gelöst. Hinsichtlich wesentlicher weiterer Ausgestaltungen wird auf die Patentansprüche 2 bis 5 verwiesen.

Die bei dem Axiallager des erfindungsgemäßen Meißeldirektantriebs verwirklichte Kippbarkeit ermöglichst im Betrieb die Bildung eines Schmierspaltes und damit einen verschleißgünstigen Betriebsverlauf. Das die Gleitkörper abstützende Federpaket, erlaubt dem Gleitkörper Axialverlagerungen mit weitaus größerem Federweg, so daß das Lager einem größen Toleranzausgleich erbringt. Die aus Spezialfederstahl bestehenden Tellerfedern sind dabei besonders temperaturunempfindlich, verschleißfest trotz der abrasiven Wirkung der Bohrspülung und bieten besonders günstige statische und dynamische Reibwerte dar. Die Belastbarkeit einer Spurring/Lagerring-Paarung ist zwar gegenüber dem bekannten Lager mit Biegebalkenabstützung des Lagersegmentes geringer, jedoch leichter an jeweilige Belastungsanforderungen anpaßbar, da die Federcharakteristik durch Änderungen des Federpaketes leichter und kostengünstiger verändert werden kann als die eines im Tragring ausgeformten Biegebalkens.

Weitere Einzelheiten und Vorteile ergeben sich aus der nachfolgenden Beschreibung und der Zeichnung, in der zwei Ausführungsbeispiele des Gegenstands der Erfindung näher veranschaulicht sind. In der Zeichnung zeigen:

Fig. 1 als Prinzipdarstellung einen abgebrochenen Längsschnitt durch einen Meißeldirektantrieb nach der Erfindung,

Fig. 2 einen Halbschnitt nach der Linie II-II in Fig. 1,

Fig. 3 einen Schnitt nach der Linie III-III in Fig. 2,

Fig. 4 in einer abgebrochenen Ausschnittdarstellung eine Seitenansicht eines Gleitkörpers mit einer Federpaketabstützung durch ein Paar Tellerfedern, und

Fig. 5 eine Ansicht ähnlich Fig. 4 zur Veranschaulichung einer Federpaketabstützung mit vier Tellerfedern.

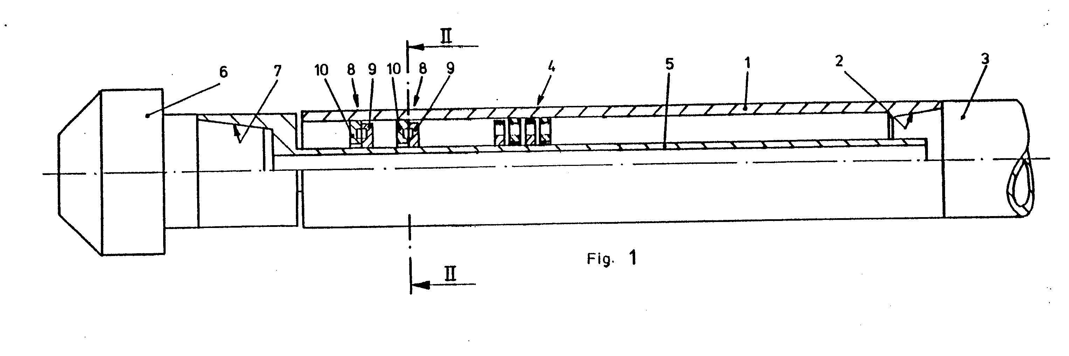

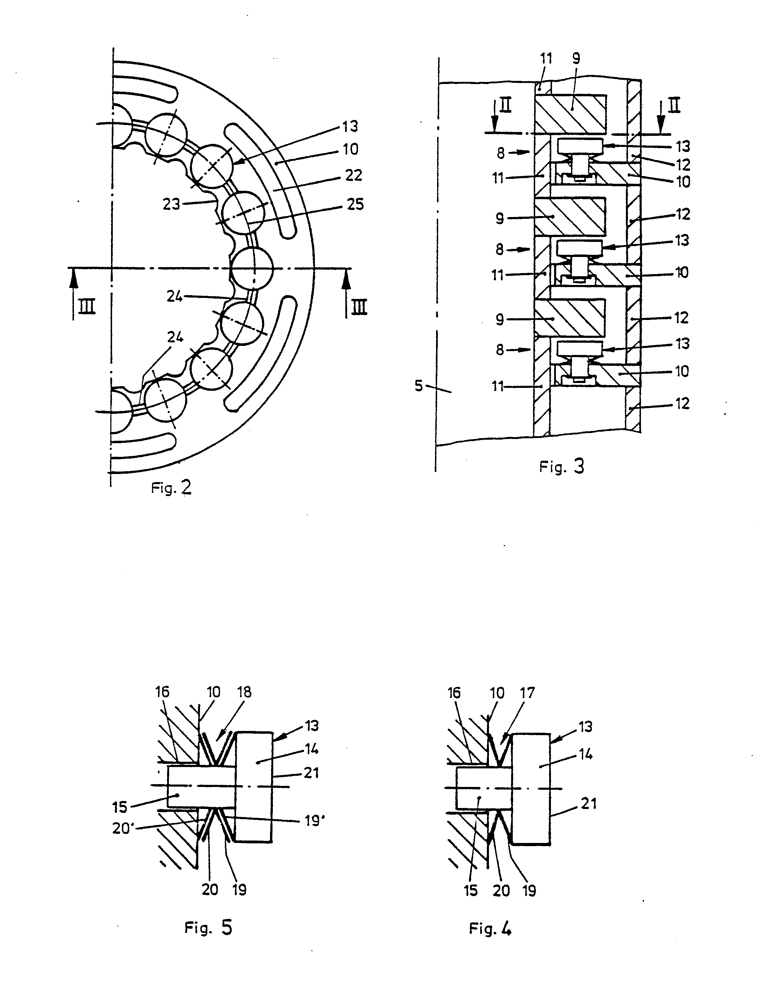

Der in Fig. 1 dargestellte Meißeldirektantrieb umfaßt ein rohrförmiges Gehäuse 1, das über ein Gewinde 2 mit einem Bohrrohrstrang 3 verbindbar ist. Im Innern des Gehäuses 1 ist eine von durchströmender Bohrspülung antreibbare Rotationsmaschine in Gestalt einer Turbine 4 angeordnet, deren Welle 5 axial aus dem Gehäuse 1 austritt und ein Gewinde 7 für eine Verbindung mit einem Drehbohrmeißel 6 aufweist. Zur Aufnahme der auf die Welle 5 einwirkenden Axialkräfte ist bei dem in Fig. 1 dargestellten Beispiel ein Axiallager mit zwei, bei dem Beispiel nach Fig. 3 mit 3 Spurring/Tragring-Paarungen 8 vorgesehen, die bevorzugt untereinander gleich sind und jeweils einen Spurring 9 und einen Tragring 10 umfassen. Die Zahl der Spurring/TragringPaarungen 8 richtet sich nach den jeweiligen Belastungsbedingungen, unter denen das Tiefbohrwerkzeuge zu arbeiten hat.

Wie der Fig. 3 näher entnommen werden kann, sind die Spurringe 9 jeweils an der Welle 5 abgestützt, und zwar unter Zuhilfenahme von Distanzstücken 11, während die Tragringe 10 am Gehäuse 1 und zwar ebenfalls unter Zu hilfenahme von Distanzstücken 12. abgestützt sind.

Die Tragringe 10 weisen eine Mehrzahl von über ihren Umfang regelmäßig verteilt angeordneten Lagersegmenten 13 auf, die jeweils einen gegen die Wirkung einer Federkraft begrenzt kipp- und axialverlagerbar gegenüber dem Tragring abgestützten Gleitkörper 14 umfassen. Der Gleitkörper 14 ist dabei als kreisförmige Platte ausgebildet, der an seiner unterseite einen Haltezapfen 15 trägt. Diese haltezapfen 15, die zur Vermeidung von Sedimentierungserscheinungen bevorzugt polygonal im Querschnitt ausgeführt sind, greifen in Axialborhrungen 16 im Tragring 10 ein, wobei zwischen dem Haltezapfen 15 und den bevorzugt kreisrunden Axialborhrungen 16 soviel Spiel verbleibt, daß die Gleitkörper 14 als Ganzes begrenzt kippbar sind.

Die Gleitkörper 14 sind gegenüber dem Tragring 10 durch ein Federpaket 17 bzw. 18 abgestützt, von denen das Federpaket 17 zwei gegensinnig gestapelte Tellerfedern 19, 20 aufweist und von denen das Federpaket 18 vier Tellerfedern 19, 19', 20, 20' unfaßt, von denen die Tellerfedern 19, 19' einerseits und 20, 20' andererseits paarweise gleichsinnig aufeinanderliegen und paarweise gegensinnig gestapelt sind.

Die Gleitkörper 14 können als Stahlkörper ausgebildet sein, der an seiner Oberseite eine Lagerschicht 21 aus einem harten, verschleißfestem lagermaterial, z. B. einem gesinterten Metallpulver-Keramikwerkstoff oder bevorzugt aus polykristallinem Diamant, trägt. Die Spurringe 9 bestehen ihrerseits aus einem Trägerkörper aus vorzugsweise Stahl und einer Auflage aus lagermaterial vorgenannter Art.

Der Lagerring 10 weist im Bereich radial außerhalb der Gleitkörper 14 Durchtrittsschlitze 22 für die Bohrspülung auf und ist auch im Bereich seines innenliegenden Randes mit Ausnehmungen 23 versehen, die einen Durchtritt der Bohrspülung verbessern. Zugleich mindern die Schlitze 22 bis 23 das Gewicht der Tragringe.

Die Axialbohrungen 16 im Tragring 10 sind im Bereich ihrer oberen Enden untereinander durch Abschnitte 24 einer (im Bereich der Axialbohrungen 16 unterbrochenen) in die Oberseite des Tragringes 10 eingeformten Ringnut verbunden, deren mittlerer Durchmesser dem Durchmesser des Mittelpunktskreises 25 der Axialbohrungen 16 entspricht. Auch diese Nut dient dazu, Ablagerungen im Bereich der Gleitkörper 14, insbesondere auch in den Axialbohrungen 16, zu vermeiden, die den federnden Verlagerungsbewegungen der Gleitkörper 14 entgegenwirken könnten.

## Ansprüche

1. Meißeldirektantrieb für Tiefbohrwerkzeuge, mit einem rohrförmigen Gehäuse (1), einer darin angeordneten, von durchströmender Bohrspülung antreibbaren Rotationsmaschine (4), einer mit dieser und einem Drehbohrmeißel (6) verbundenen, radial gelagerten Welle (5) und mit zumindest einem der Bohrspülung ausgesetzten Gleitlager (8) zur Axiallagerung der Welle (5), das wenigstens einen an der Welle (5) abgestützten Spurring (9) sowie wenigstens einen jeweils mit einem Spurring (9) zusammenwirkenden, am Gehäuse (1) abgestützten Tragring (10) umfaßt, der eine Mehrzahl von über seinen Umfang regelmäßig verteilt angeordneten lagersegmenten (13) aufweist, die einen gegen die Wirkung einer Federkraft begrenzt kipp-und axialverlagerbar gegenüber dem Tragring abgestützten Gleitkörper (14) umfassen, dadurch gekennzeichnet, daß der Gleitkörper (14) als kreisförmige Platte ausgebildet ist, die an ihrer Unterseite einen mit Spiel in eine axiale Bohrung (16) im Tragring (10) eingreifenden Haltezapfen (15) trägt und gegenüber dem Tragring (10) durch ein Federpaket (17;18) mit zumindest zwei gegensinnig gestapelten Tellerfedern (19,20) abgestützt ist.

2. Meißeldirektantrieb nach Anspruch 1, dadurch gekennzeichnet, daß das Federpaket (18) vier Tellerfedern (19,19';20,20') umfaßt, von denen je zwei paarweise gleichsinnig aufeinanderliegen.

3. Meißeldirektantrieb nach Anspruch 1 oder 2, dadurch gekennzeichnet, daß der Haltezapfen (15) einen polygonen Querschnitt aufweist.

4. Meißeldirektantrieb nach einem der Ansprüche 1 bis 3, dadurch gekennzeichnet, daß die Axialbohrungen (16) zur Aufnahme der Haltezapfen (15) kreisförmig ausgebildet und im Bereich ihrer oberen Enden untereinander durch Abschnitte (24) einer in der Oberseite des Tragringes (10) angebrachten Ringnut verbunden sind, deren mittlerer Durchmesser dem Durchmesser des Mittelpunktkreises (25) der Axialbohrungen (16) im Tragring (10) entspricht.

5. Meißeldirektantrieb nach einem der Ansprüche 1 bis 4, dadurch gekennzeichnet, daß jeder Gleitkörper (14) als Stahlkörper ausgebildet ist, der an seiner Oberseite eine Lagerschicht (21) aus polykristallinem Diamant trägt.

Fig. 1

Fig. 2

Fig. 3

Fig. 5

Fig. 4